# FASCICULE DE BREVET EUROPEEN

(11) **EP 3 572 184 B1**
(45) Date de publication et mention de la délivrance du brevet: **08.07.2020**
(21) Numéro de dépôt: 19172882.3
(22) Date de dépôt: 07.05.2019
(51) Int. Cl.: B23P 9/02, C21D 7/02, C21D 7/08, C21D 7/12, B24B 39/02

(54) **OUTIL D'EXPANSION À FROID D'UN ALÉSAGE À TRAVERS UNE PIÈCE**
WERKZEUG ZUR KALTDEHNUNG EINER BOHRUNG DURCH EIN WERKSTÜCK
TOOL FOR COLD EXPANSION OF A BORE THROUGH A PART

(30) Priorité: 23.05.2018 FR 1854295
(43) Date de publication de la demande: 27.11.2019
(73) Titulaire: AIRBUS OPERATIONS (S.A.S.), 31060 Toulouse (FR)
(72) Inventeur: CAZABONNE, Yannick, 31060 Toulouse Cedex 9 (FR); JAMILLOUX, Guillaume, 31060 Toulouse Cedex 9 (FR)
(74) Mandataire: Gicquel, Olivier Yves Gérard

(56) Documents cités:
- FR-A5- 2 169 633
- US-A1- 2013 260 168

## Description

### DOMAINE TECHNIQUE

La présente invention concerne un outil d'expansion à froid d'un alésage formé à travers une pièce.

### ÉTAT DE LA TECHNIQUE

L'expansion à froid d'un alésage est usuellement utilisée pour écrouir le matériau d'une pièce sur la surface d'un alésage formé à travers la pièce. L'écrouissage permet de modifier les propriétés mécaniques du matériau de la pièce au niveau de l'alésage. Elle permet de retarder l'apparition ou la propagation de criques causées par la fatigue du matériau.

Actuellement, l'expansion à froid est réalisée à l'aide d'un brunissoir et d'une bague fendue. La bague fendue est placée à l'intérieur de l'alésage. Le brunissoir passe alors en force à l'intérieur de la bague. Le diamètre extérieur du brunissoir étant supérieur au diamètre intérieur de la bague fendue, le passage en force du brunissoir dans la bague fendue entraîne une expansion de la bague et de l'alésage.

Le document US 2013/260168 A1 divulgue un outil et un procédé pour la réalisation d'une expansion à froid d'un alésage à travers une pièce.

L'utilisation d'une bague fendue entraîne des inconvénients. En particulier, elle peut laisser une partie de la surface interne de l'alésage non écrouie au niveau de la fente de la bague fendue et une mauvaise répartition des contraintes résiduelles engendrées par l'expansion. De plus, un procédé utilisant une bague fendue impose de nombreuses restrictions dues au matériau et au sens de fibrage de la pièce à expanser.

### EXPOSÉ DE L'INVENTION

La présente invention a pour objet de pallier ces inconvénients en proposant un outil permettant une expansion à froid.

À cet effet, l'invention concerne un outil d'expansion à froid d'un alésage à travers une pièce.

Selon l'invention, l'outil d'expansion à froid comprend :
- un corps d'outil configuré pour manipuler l'outil d'expansion à froid ;
- un premier module d'entraînement configuré pour entraîner en rotation une cage à aiguilles cylindrique dans l'alésage, la cage à aiguilles cylindrique présentant un premier axe de révolution autour de laquelle la cage à aiguilles est destinée à entrer rotation dans l'alésage, la cage à aiguilles comportant des aiguilles configurées pour se déplacer radialement en s'éloignant du premier axe de révolution afin de venir écrouir l'alésage pendant que la cage à aiguilles est entraînée en rotation par le premier module d'entraînement;
- une tige présentant un deuxième axe de révolution, la tige étant destinée à être insérée dans la cage à aiguille, la tige présentant une première extrémité munie d'un brunissoir destiné à déplacer radialement les aiguilles de la cage à aiguilles lorsque le brunissoir traverse la cage à aiguilles, la tige étant configurée pour entrer en translation dans le corps d'outil selon le deuxième axe de révolution parallèlement au premier axe de révolution afin de faire traverser le brunissoir dans la cage à aiguilles ;
- un deuxième module d'entraînement destiné à entraîner la tige en translation selon le deuxième axe de révolution de façon à ce que le brunissoir traverse entièrement la cage à aiguille retenue dans l'alésage.

Ainsi, le premier module d'entraînement peut entraîner en rotation une cage à aiguilles introduite dans l'alésage. La rotation de la cage à aiguille dans l'alésage permet de traiter par écrouissage l'ensemble de la surface interne de l'alésage sans laisser de partie de la surface interne non traitée grâce au brunissoir qui traverse la cage à aiguille en déplaçant radialement les aiguilles en les éloignant du premier axe de révolution.

Selon une première variante, la tige comprend :
- une deuxième extrémité présentant un filetage et
- un tronçon comprenant des premières cannelures, en ce que le corps d'outil comprend une ouverture présentant un taraudage, le filetage de la deuxième extrémité de la tige étant configuré pour coopérer avec le taraudage de l'ouverture du corps d'outil,
et en ce que le deuxième module d'entraînement comprend une première roue dentée, une deuxième roue dentée et un premier moteur fixé au corps d'outil, le premier moteur étant configuré pour générer un premier couple-moteur, la première roue dentée étant configurée pour transmettre le premier couple-moteur à la deuxième roue dentée, la deuxième roue dentée comprenant un moyeu présentant des deuxièmes cannelures, les deuxièmes cannelures étant configurées pour coopérer avec les premières cannelures du tronçon de tige afin d'entraîner la tige en rotation autour du deuxième axe de révolution, la rotation de la tige entraînant la translation de la tige par l'intermédiaire de la coopération du filetage de la deuxième extrémité de la tige et du taraudage de l'ouverture du corps d'outil.

Selon une deuxième variante, l'outil comprend un troisième module d'entraînement destiné à entraîner la tige en rotation autour du deuxième axe de révolution.

En outre, le premier module d'entraînement comprend le deuxième module d'entraînement, le brunissoir étant configuré pour entraîner en rotation la cage à aiguilles par frottement lorsque le brunissoir traverse la cage à aiguilles.

De plus, le premier module d'entraînement comprend le troisième module d'entraînement, le brunissoir étant configuré pour entraîner en rotation la cage à aiguilles par frottement lorsque le brunissoir traverse la cage à aiguilles.

Par ailleurs, le premier module d'entraînement comprend :
- un cylindre comportant un premier dispositif de connexion,
- une troisième roue dentée,
- une quatrième roue dentée coaxiale et solidaire du cylindre et
- un deuxième moteur fixé au corps d'outil et configuré pour générer un deuxième couple-moteur,
le cylindre présentant un troisième axe de révolution confondu avec le premier axe de révolution,
la troisième roue dentée étant configurée pour transmettre le deuxième couple-moteur à la quatrième roue dentée,
la quatrième roue dentée étant configurée pour entraîner en rotation le cylindre autour du troisième axe de révolution lorsque la troisième roue dentée transmet le deuxième couple-moteur à la quatrième roue dentée,
le premier dispositif de connexion étant configuré pour coopérer avec un deuxième dispositif de connexion de la cage à aiguilles afin que la rotation du cylindre autour du troisième axe de révolution puisse entraîner la rotation de la cage à aiguilles autour du premier axe de révolution.

L'invention concerne également un ensemble destiné à réaliser une expansion à froid d'un alésage à travers une pièce.

Selon l'invention, l'ensemble comprend :
- un outil d'expansion à froid d'un alésage à travers une pièce tel que décrit ci-dessus, et
- une cage à aiguilles cylindrique présentant un premier axe de révolution autour de laquelle la cage à aiguilles est destinée à entrer rotation dans l'alésage, la cage à aiguilles comportant des aiguilles présentant des axes longitudinaux destinées à être parallèles au premier axe de révolution, les aiguilles étant configurées pour se déplacer radialement en s'éloignant du premier axe de révolution afin de venir écrouir l'alésage pendant que la cage à aiguilles est entraînée en rotation par le premier module d'entraînement.
   L'invention concerne également un procédé d'utilisation d'un ensemble destiné à réaliser une expansion à froid d'un alésage à travers une pièce, tel que décrit ci-dessus,
   caractérisé en ce qu'il comprend les étapes suivantes :
- une étape de placement de la cage à aiguilles dans l'alésage,
- une étape de maintien de la cage à aiguilles dans l'alésage,
- une étape d'entraînement en rotation de la cage à aiguille dans l'alésage par le premier module d'entraînement,
- une étape de mise en translation de la tige le long du deuxième axe de révolution, mise en œuvre par le deuxième module d'entraînement, consistant à entraîner la tige en translation selon le deuxième axe de révolution de façon à ce que le brunissoir traverse entièrement la cage à aiguille retenue dans l'alésage.

En outre, le procédé comprend :
- une étape de glissement de la cage à aiguilles sur la tige, l'étape de glissement précédant l'étape de placement de la cage à aiguilles dans l'alésage.

De plus, le procédé comprend une étape de mise en rotation de la tige autour du deuxième axe de révolution, mise en œuvre par le deuxième module d'entraînement, l'étape de mise en rotation étant concomitante avec l'étape de mise en translation.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente une vue de profil d'un mode de réalisation de l'outil d'expansion à froid muni d'une cage à aiguilles avant la traversée du brunissoir dans la cage à aiguilles,
- la figure 2 représente une vue de profil du mode de réalisation de la figure 1 de l'outil d'expansion à froid muni d'une cage à aiguilles lors de la traversée du brunissoir dans la cage à aiguilles,
- la figure 3 représente une vue de profil du mode de réalisation de la figure 1 de l'outil d'expansion à froid muni d'une cage à aiguilles après la traversée du brunissoir dans la cage à aiguilles,
- la figure 4 représente une vue schématique du procédé d'utilisation de l'ensemble comprenant l'outil d'expansion à froid et de la cage à aiguilles,
- la figure 5 représente une vue en perspective d'une cage à aiguilles,
- la figure 6 représente une vue d'une cage à aiguille suivant la direction de la ligne de révolution de la cage à aiguille.

### DESCRIPTION DÉTAILLÉE

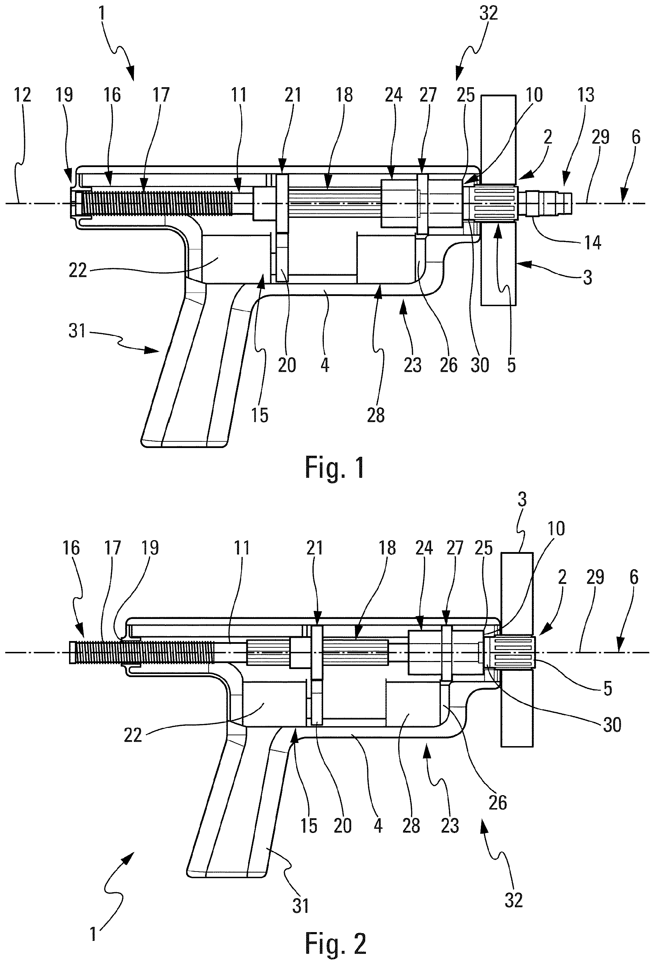

Un mode de réalisation de l'outil d'expansion à froid 1 est représenté sur les figures 1 à 3.

L'outil d'expansion à froid 1 permet une expansion d'un alésage 2 (circulaire) à travers une pièce 3.

La pièce 3 peut être une plaque. La pièce 3 peut comprendre plusieurs pièces empilées entre elles. Certaines de ces pièces peuvent être fabriquées en matériau composite.

L'outil d'expansion à froid 1 comprend un corps d'outil 4.

Comme représenté sur les figures 1 à 3, le corps d'outil 4 peut avoir une forme de pistolet comprenant un dispositif de préhension 31 permettant à un utilisateur de manipuler et/ou d'utiliser l'outil d'expansion à froid 1.

L'outil d'expansion à froid 1 comprend également un premier module d'entraînement 23 configuré pour entraîner en rotation une cage à aiguilles 5 cylindrique introduite dans l'alésage 2.

L'outil d'expansion à froid 1 et la cage à aiguilles 5 forment alors un ensemble 32 destiné à réaliser une expansion à froid d'un alésage 2.

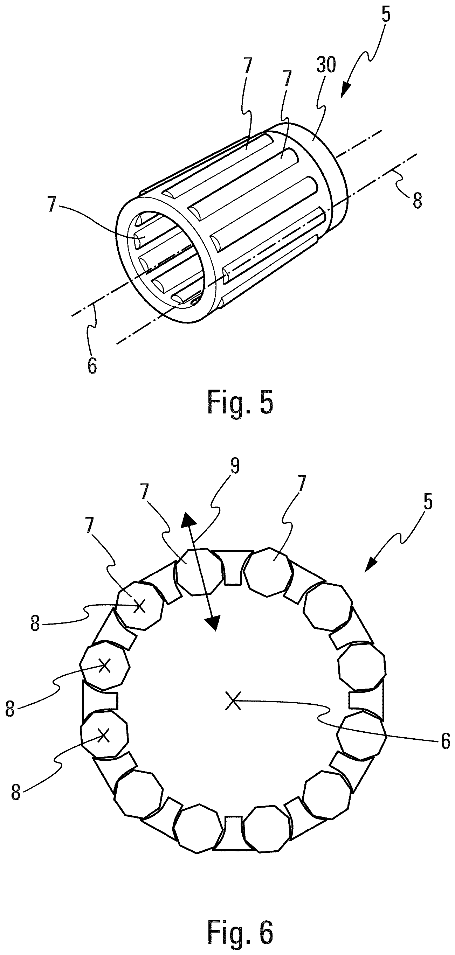

Les figures 5 et 6 représentent des exemples de cages à aiguilles 5 capables d'être entraînées par le premier module d'entraînement 23.

Sur ces figures 5 et 6, la cage à aiguilles 5 cylindrique présente un axe de révolution 6 autour de laquelle la cage à aiguilles 5 est destinée à entrer rotation dans l'alésage 2. La cage à aiguilles 5 comportant des aiguilles 7 présentant des axes longitudinaux 8 destinées à être parallèles à l'axe de révolution 6. Les aiguilles 7 sont configurées pour se déplacer radialement en s'éloignant de l'axe de révolution 6 afin de venir écrouir la surface de l'alésage 2 pendant que la cage à aiguilles 5 est entraînée en rotation par le premier module d'entraînement 23. Sur la figure 5, la double flèche indiquée par la référence 9 représente les mouvements possibles d'une aiguille 7 d'une cage à aiguilles 5. Pour écrouir la surface de l'alésage 2, le mouvement correspond à la partie de la double flèche indiquant une direction à l'opposé de l'axe d révolution 6.

Avantageusement, le premier module d'entraînement 23 présente une interface de connexion 10 permettant de maintenir la cage à aiguilles 5 dans l'alésage 2 lorsque la cage à aiguilles 5 est entraînée en rotation par le premier module d'entraînement 23.

Selon un mode de réalisation de l'outil d'expansion à froid 1 représenté sur les figures 1 à 3, l'outil d'expansion à froid 1 comprend une tige 11 présentant un axe de révolution 12 et un deuxième module d'entraînement 15.

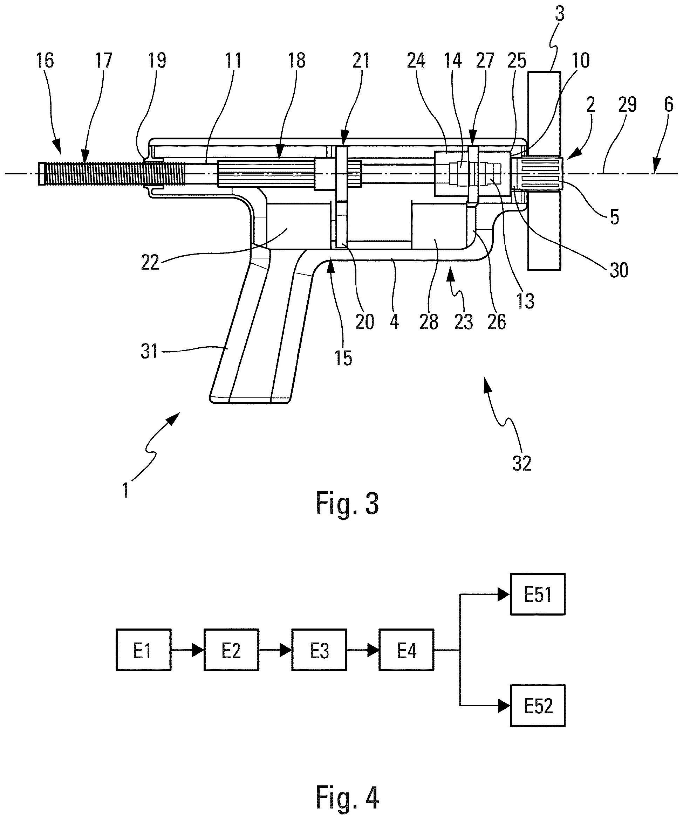

La tige 11 est destinée à être insérée dans la cage à aiguille 5. La tige 11 présentant une extrémité 13 munie d'un brunissoir 14. Le brunissoir 14 est destiné à déplacer radialement les aiguilles 7 de la cage à aiguilles 5 lorsque le brunissoir 14 traverse la cage à aiguilles 5 (figure 2). La tige 11 est donc configurée pour entrer en translation dans le corps d'outil 4 le long de l'axe de révolution 12 parallèlement à l'axe de révolution 6 afin que le brunissoir 14 puisse traverser la cage à aiguilles 5. La figure 1 représente le brunissoir 14 avant qu'il ne traverse la cage à aiguilles 5. La figure 3 représente le brunissoir 14 après qu'il a traversé la cage à aiguille 5.

Par exemple, le brunissoir 14 possède une forme de cylindre dont les extrémités sont terminées par une forme demi-sphérique ou conique. Avantageusement, le diamètre du cylindre formant le brunissoir 14 est sensiblement inférieur ou égal au diamètre de l'alésage 2 et sensiblement supérieur au diamètre intérieur de la cage à aiguilles 5 lorsque les aiguilles 7 sont rapprochées de l'axe de révolution 6. Le diamètre de la cage à aiguilles 5 lorsque les aiguilles sont éloignées de l'axe de révolution 6 est sensiblement supérieure au diamètre de l'alésage 2.

Le deuxième module d'entraînement 15 est destiné à entraîner la tige 11 en translation le long de l'axe de révolution 12 de façon à ce que le brunissoir 14 traverse entièrement la cage à aiguille 5 retenue dans l'alésage 2.

Selon une première variante du premier mode de réalisation de l'outil d'expansion à froid 1, représentée sur les figures 1 à 3, la tige 11 comprend :
- une extrémité 16 présentant un filetage 17 et
- un tronçon 18 comprenant des premières cannelures.

Dans cette première variante, le corps d'outil 4 comprend une ouverture 19 présentant un taraudage. Le filetage 17 de l'extrémité 16 de la tige 11 est configuré pour coopérer avec le taraudage de l'ouverture 19 du corps d'outil 4.

De plus, le deuxième module d'entraînement 15 comprend une roue dentée 20, une roue dentée 21 et un moteur 22 fixé au corps d'outil 4. Le moteur 22 est configuré pour générer un premier couple-moteur.

La roue dentée 20 est configurée pour transmettre le premier couple-moteur à la roue dentée 21 .La deuxième roue dentée 21 comprend un moyeu présentant des deuxièmes cannelures (non représentées). Les deuxièmes cannelures sont configurées pour coopérer avec les premières cannelures du tronçon 18 de tige 11 afin d'entraîner la tige 11 en rotation autour de l'axe de révolution 12 tout en permettant la translation de la tige 11 le long de l'axe de révolution 12. La rotation de la tige 11 entraîne la translation de la tige 11 par l'intermédiaire de la coopération du filetage 17 de l'extrémité 16 de la tige 11 et du taraudage de l'ouverture 19 du corps d'outil 4. Les premières cannelures du tronçon 18 présentent une longueur suffisante permettant une connexion permanente entre les premières et deuxièmes cannelures malgré la translation de la tige 11 par rapport à la deuxième roue dentée 21. Par exemple, la longueur des deuxièmes cannelures est supérieure ou égale à une distance maximale de déplacement de la tige 11 en translation.

Dans cette première variante, le deuxième module d'entraînement 15 assure la translation et la rotation de la tige 11.

Selon une deuxième variante non représentée de l'outil d'expansion à froid 1, l'outil d'expansion à froid 1 comprend un troisième module d'entraînement destiné à entraîner la tige 11 en rotation autour de l'axe de révolution 12. Ainsi, la rotation de la tige 11 autour de l'axe de révolution 12 est découplée de la translation de la tige le long de l'axe de révolution 12. Dans cette deuxième variante, le deuxième module d'entraînement peut être un vérin et le troisième module d'entraînement peut être un moteur générant un couple-moteur.

Selon un premier mode de réalisation du premier module d'entraînement non représenté, le premier module d'entraînement comprend le deuxième module d'entraînement 15. Le brunissoir 14 peut être entraîné par la rotation de la tige 11 autour de l'axe de révolution 12, la tige étant entraînée en rotation et en translation par le deuxième module d'entraînement 15. Le brunissoir 14 est alors configuré pour entraîner en rotation la cage à aiguilles 5 par frottement lorsque le brunissoir 14 traverse la cage à aiguilles 5.

Selon un deuxième mode de réalisation du premier module d'entraînement non représenté, le premier module d'entraînement comprend le troisième module d'entraînement. Le brunissoir 14 peut être entraîné par la rotation de la tige 11 autour de l'axe de révolution 12, la tige étant entraînée en rotation par le troisième module d'entraînement. Comme pour le premier mode de réalisation du premier module d'entraînement, le brunissoir 14 est configuré pour entraîner en rotation la cage à aiguilles 5 par frottement lorsque le brunissoir 14 traverse la cage à aiguilles 5.

Selon un troisième mode de réalisation du premier module d'entraînement représenté sur les figures 1 à 3, le premier module d'entraînement 23 comprend :
- un cylindre 24 comportant un dispositif de connexion 25,
- une roue dentée 26,
- une roue dentée 27 coaxiale et solidaire au cylindre 24 et
- un moteur 28 fixé au corps d'outil 4 et configuré pour générer un deuxième couple-moteur.

Dans ce troisième mode de réalisation du premier module d'entraînement, le cylindre 24 présente un axe de révolution 29 confondu avec l'axe de révolution 6. La roue dentée 26 étant configurée pour transmettre le deuxième couple-moteur à la roue dentée 27. La roue dentée 27 est configurée pour entraîner en rotation le cylindre 24 autour de l'axe de révolution 29 lorsque la roue dentée 26 transmet le deuxième couple-moteur à la roue dentée 27. Le dispositif de connexion 25 est configuré pour coopérer avec un dispositif de connexion 30 de la cage à aiguilles 5 afin que la rotation du cylindre 24 autour de l'axe de révolution 29 puisse entraîner la rotation de la cage à aiguilles 5 autour de l'axe de révolution 6.

L'ensemble destiné à réaliser une expansion à froid comprenant l'outil d'expansion à froid 1 et la cage à aiguille 5 peut être utilisé selon le procédé d'utilisation suivant (figure 4).

Ledit procédé d'utilisation comprend les étapes suivantes :
- une étape E2 de placement de la cage à aiguilles 5 dans l'alésage 2,
- une étape E3 de maintien de la cage à aiguilles 5 dans l'alésage 2,
- une étape E4 d'entraînement en rotation de la cage à aiguille 5 dans l'alésage 2 par le premier module d'entraînement 23,
- une étape E51 de mise en translation de la tige 11 le long de l'axe de révolution 12, mise en œuvre par le deuxième module d'entraînement 15, consistant à entraîner la tige 11 en translation selon l'axe de révolution 12 de façon à ce que le brunissoir 14 traverse entièrement la cage à aiguille 5 retenue dans l'alésage 2. Cette étape E51 suit l'étape E4 d'entraînement en rotation de la cage à aiguilles 5.

Selon le mode de réalisation de l'outil d'expansion 1 représenté sur les figures 1 à 3, le procédé d'utilisation peut comprendre en outre :
- une étape E1 de glissement de la cage à aiguilles 5 sur la tige 11. Cette étape E1 précède l'étape E2 de placement de la cage à aiguilles 5 dans l'alésage 2.

Le procédé d'utilisation peut également comprendre en outre une étape E52 de mise en rotation de la tige 11 autour de l'axe de révolution 12, l'étape E52 de mise en rotation étant concomitante avec l'étape E51 de mise en translation.

## Revendications

1. Outil d'expansion à froid d'un alésage (2) à travers une pièce (3), **caractérisé en ce qu'**il comprend :
- un corps d'outil (4) configuré pour manipuler l'outil d'expansion à froid (1) ;
- un premier module d'entraînement (23) configuré pour entraîner en rotation une cage à aiguilles (5) cylindrique dans l'alésage (2), la cage à aiguilles (5) cylindrique présentant un premier axe de révolution (6) autour de laquelle la cage à aiguilles (5) est destinée à entrer rotation dans l'alésage (2), la cage à aiguilles (5) comportant des aiguilles (7) configurées pour se déplacer radialement (9) en s'éloignant du premier axe de révolution (6) afin de venir écrouir l'alésage (2) pendant que la cage à aiguilles (5) est entraînée en rotation par le premier module d'entraînement (23) ;
- une tige (11) présentant un deuxième axe de révolution (12), la tige (11) étant destinée à être insérée dans la cage à aiguille (5), la tige (11) présentant une première extrémité (13) munie d'un brunissoir (14) destiné à déplacer radialement les aiguilles (7) de la cage à aiguilles (5) lorsque le brunissoir (14) traverse la cage à aiguilles (5), la tige (11) étant configurée pour entrer en translation dans le corps d'outil (4) selon le deuxième axe de révolution (12) parallèlement au premier axe de révolution (6) afin de faire traverser le brunissoir (14) dans la cage à aiguilles (5) ;
- un deuxième module d'entraînement (15) destiné à entraîner la tige (11) en translation selon le deuxième axe de révolution (12) de façon à ce que le brunissoir (14) traverse entièrement la cage à aiguille (5) retenue dans l'alésage (2).

2. Outil selon la revendication 1,
**caractérisé en ce que** la tige (11) comprend :
- une deuxième extrémité (16) présentant un filetage (17) et
- un tronçon (18) comprenant des premières cannelures,
**en ce que** le corps d'outil (4) comprend une ouverture (19) présentant un taraudage, le filetage (17) de la deuxième extrémité (16) de la tige (11) étant configuré pour coopérer avec le taraudage de l'ouverture (19) du corps d'outil (4),
et **en ce que** le deuxième module d'entraînement (15) comprend une première roue dentée (20), une deuxième roue dentée (21) et un premier moteur (22) fixé au corps d'outil (4), le premier moteur (22) étant configuré pour générer un premier couple-moteur, la première roue dentée (21) étant configurée pour transmettre le premier couple-moteur à la deuxième roue dentée (22), la deuxième roue dentée (21) comprenant un moyeu présentant des deuxièmes cannelures, les deuxièmes cannelures étant configurées pour coopérer avec les premières cannelures du tronçon (18) de tige (11) afin d'entraîner la tige (11) en rotation autour du deuxième axe de révolution (12), la rotation de la tige (11) entraînant la translation de la tige (11) par l'intermédiaire de la coopération du filetage (17) de la deuxième extrémité (16) de la tige (11) et du taraudage de l'ouverture (19) du corps d'outil (4).

3. Outil selon la revendication 1,
**caractérisé en ce qu'**il comprend un troisième module d'entraînement destiné à entraîner la tige (11) en rotation autour du deuxième axe de révolution (12).

4. Outil selon la revendication 2,
**caractérisé en ce que** le premier module d'entraînement (23) comprend le deuxième module d'entraînement (15), le brunissoir (14) étant configuré pour entraîner en rotation la cage à aiguilles (5) par frottement lorsque le brunissoir (14) traverse la cage à aiguilles (5).

5. Outil selon la revendication 3,
**caractérisé en ce que** le premier module d'entraînement (23) comprend le troisième module d'entraînement, le brunissoir (14) étant configuré pour entraîner en rotation la cage à aiguilles (5) par frottement lorsque le brunissoir (14) traverse la cage à aiguilles (5).

6. Outil selon l'une quelconque des revendications 1 à 3,
**caractérisé en ce que** le premier module d'entraînement (23) comprend :
- un cylindre (24) comportant un premier dispositif de connexion (25),
- une troisième roue dentée (26),
- une quatrième roue dentée (27) coaxiale et solidaire du cylindre (24) et
- un deuxième moteur (28) fixé au corps d'outil (4) et configuré pour générer un deuxième couple-moteur,
le cylindre (24) présentant un troisième axe de révolution (29) confondu avec le premier axe de révolution (6),
la troisième roue dentée (26) étant configurée pour transmettre le deuxième couple-moteur à la quatrième roue dentée (27),
la quatrième roue dentée (27) étant configurée pour entraîner en rotation le cylindre (24) autour du troisième axe de révolution (29) lorsque la troisième roue dentée (26) transmet le deuxième couple-moteur à la quatrième roue dentée (27),
le premier dispositif de connexion (25) étant configuré pour coopérer avec un deuxième dispositif de connexion (30) de la cage à aiguilles (5) afin que la rotation du cylindre (24) autour du troisième axe de révolution (29) puisse entraîner la rotation de la cage à aiguilles (5) autour du premier axe de révolution (6).

7. Ensemble destiné à réaliser une expansion à froid d'un alésage (2) à travers une pièce (3),
**caractérisé en ce qu'**il comprend :
- un outil d'expansion à froid d'un alésage (2) à travers une pièce (3) selon l'une quelconque des revendications 1 à 6, et
- une cage à aiguilles (5) cylindrique présentant un premier axe de révolution (6) autour de laquelle la cage à aiguilles (5) est destinée à entrer rotation dans l'alésage (2), la cage à aiguilles (5) comportant des aiguilles (7) présentant des axes longitudinaux (8) destinées à être parallèles au premier axe de révolution (6), les aiguilles (7) étant configurées pour se déplacer radialement (9) en s'éloignant du premier axe de révolution (6) afin de venir écrouir l'alésage (2) pendant que la cage à aiguilles (5) est entraînée en rotation par le premier module d'entraînement (23).

8. Procédé d'utilisation de l'ensemble destiné à réaliser une expansion à froid (1) d'un alésage (2) à travers une pièce (3) selon la revendication 7, **caractérisé en ce qu'**il comprend les étapes suivantes :
- une étape (E2) de placement de la cage à aiguilles (5) dans l'alésage (2),
- une étape (E3) de maintien de la cage à aiguilles (5) dans l'alésage (2),
- une étape (E4) d'entraînement en rotation de la cage à aiguille (5) dans l'alésage (2) par le premier module d'entraînement (23),
- une étape (E51) de mise en translation de la tige (11) le long du deuxième axe de révolution (12), mise en œuvre par le deuxième module d'entraînement (15), consistant à entraîner la tige (11) en translation selon le deuxième axe de révolution (12) de façon à ce que le brunissoir (14) traverse entièrement la cage à aiguille (5) retenue dans l'alésage (2).

9. Procédé selon la revendication 8,
**caractérisé en ce qu'**il comprend en outre :
- une étape (E1) de glissement de la cage à aiguilles (5) sur la tige (11), l'étape (E1) de glissement précédant l'étape (E2) de placement de la cage à aiguilles (5) dans l'alésage (2).

10. Procédé selon l'une quelconque des revendications 8 ou 9, **caractérisé en ce qu'**il comprend en outre une étape (E52) de mise en rotation de la tige (11) autour du deuxième axe de révolution (12), mise en œuvre par le deuxième module d'entraînement (15), l'étape (E52) de mise en rotation étant concomitante avec l'étape (E51) de mise en translation.

## Patentansprüche

1. Werkzeug zum Kaltdehnen einer Bohrung (2) durch ein Werkstück (3) hindurch, **dadurch gekennzeichnet, dass** es umfasst:
- einen Werkzeugkörper (4), der dazu ausgestaltet ist, das Kaltdehnwerkzeug (1) zu handhaben;
- ein erstes Antriebsmodul (23), das dazu ausgestaltet ist, einen zylindrischen Nadelkäfig (5) in der Bohrung (2) drehanzutreiben, wobei der zylindrische Nadelkäfig (5) eine erste Umdrehungsachse (6) aufweist, um die herum in der Bohrung (2) zu drehen der Nadelkäfig (5) bestimmt ist, wobei der Nadelkäfig (5) Nadeln (7) beinhaltet, die dazu ausgestaltet sind, sich radial (9) von der ersten Umdrehungsachse (6) weg zu verlagern, um die Bohrung (2) kaltzuverfestigen, während der Nadelkäfig (5) durch das erste Antriebsmodul (23) drehangetrieben wird;
- eine Stange (11), die eine zweite Umdrehungsachse (12) aufweist, wobei die Stange (11) dazu bestimmt ist, in den Nadelkäfig (5) eingeführt zu werden, wobei die Stange (11) ein erstes Ende (13) aufweist, das mit einem Polierer (14) versehen ist, der dazu bestimmt ist, die Nadeln (7) des Nadelkäfigs (5) radial zu verlagern, wenn der Polierer (14) den Nadelkäfig (5) durchdringt, wobei die Stange (11) dazu ausgestaltet ist, entlang einer zweiten Umdrehungsachse (12) parallel zur ersten Umdrehungsachse (6) translatorisch in den Werkzeugkörper (4) einzudringen, um den Polierer (14) den Nadelkäfig (5) durchdringen zu lassen;
- ein zweites Antriebsmodul (15), das dazu bestimmt ist, die Stange (11) entlang der zweiten Umdrehungsachse (12) translatorisch anzutreiben, so dass der Polierer (14) den in der Bohrung (2) zurückgehaltenen Nadelkäfig (5) vollständig durchdringt.

2. Werkzeug nach Anspruch 1, **dadurch gekennzeichnet, dass** die Stange (11) umfasst:
- ein zweites Ende (16), das ein Außengewinde (17) aufweist, und
- einen Abschnitt (18), der erste Kannelierungen umfasst,
dass der Werkzeugkörper (4) eine Öffnung (19) umfasst, die ein Innengewinde aufweist, wobei das Außengewinde (17) des zweiten Endes (16) der Stange (11) dazu ausgestaltet ist, mit dem Innengewinde der Öffnung (19) des Werkzeugkörpers (4) zusammenzuwirken,
und dass das zweite Antriebsmodul (15) ein erstes Zahnrad (20), ein zweites Zahnrad (21) und einen am Werkzeugkörper (4) befestigten ersten Motor (22) umfasst, wobei der erste Motor (22) dazu ausgestaltet ist, ein erstes Motordrehmoment zu erzeugen, wobei das erste Zahnrad (21) dazu ausgestaltet ist, das erste Motordrehmoment an das zweite Zahnrad (22) zu übertragen, wobei das zweite Zahnrad (21) eine Nabe umfasst, die zweite Kannelierungen aufweist, wobei die zweiten Kannelierungen dazu ausgestaltet sind, mit den ersten Kannelierungen des Abschnitts (18) der Stange (11) zusammenzuwirken, um die Stange (11) um die zweite Umdrehungsachse (12) herum drehanzutreiben, wobei die Drehung der Stange (11) über das Zusammenwirken des Außengewindes (17) des zweiten Endes (16) der Stange (11) und des Innengewindes der Öffnung (19) des Werkzeugkörpers (4) die Translation der Stange (11) antreibt.

3. Werkzeug nach Anspruch 1, **dadurch gekennzeichnet, dass** es ein drittes Antriebsmodul umfasst, das dazu bestimmt ist, die Stange (11) um die zweite Umdrehungsachse (12) herum drehanzutreiben.

4. Werkzeug nach Anspruch 2, **dadurch gekennzeichnet, dass** das erste Antriebsmodul (23) das zweite Antriebsmodul (15) umfasst, wobei der Polierer (14) dazu ausgestaltet ist, den Nadelkäfig (5) durch Reibung drehanzutreiben, wenn der Polierer (14) den Nadelkäfig (5) durchdringt.

5. Werkzeug nach Anspruch 3, **dadurch gekennzeichnet, dass** das erste Antriebsmodul (23) das dritte Antriebsmodul umfasst, wobei der Polierer (14) dazu ausgestaltet ist, den Nadelkäfig (5) durch Reibung drehanzutreiben, wenn der Polierer (14) den Nadelkäfig (5) durchdringt.

6. Werkzeug nach einem der Ansprüche 1 bis 3, **dadurch gekennzeichnet, dass** das erste Antriebsmodul (23) umfasst:
- einen Zylinder (24), der eine erste Anschlussvorrichtung (25) beinhaltet,
- ein drittes Zahnrad (26),
- ein viertes Zahnrad (27), das koaxial zum Zylinder (24) und mit diesem fest verbunden ist, und
- einen zweiten Motor (28), der am Werkzeugkörper (4) befestigt ist und dazu ausgestaltet ist, ein zweites Motordrehmoment zu erzeugen,
wobei der Zylinder (24) eine dritte Umdrehungsachse (29) aufweist, die deckungsgleich mit der ersten Umdrehungsachse (6) ist,
wobei das dritte Zahnrad (26) dazu ausgestaltet ist, das zweite Motordrehmoment an das vierte Zahnrad (27) zu übertragen,
wobei das vierte Zahnrad (27) dazu ausgestaltet ist, den Zylinder (24) um die dritte Umdrehungsachse (29) herum drehanzutreiben, wenn das dritte Zahnrad (26) das zweite Motordrehmoment an das vierte Zahnrad (27) überträgt,
wobei die erste Anschlussvorrichtung (25) dazu ausgestaltet ist, mit einer zweiten Anschlussvorrichtung (30) des Nadelkäfigs (5) zusammenzuwirken, damit die Drehung des Zylinders (24) um die dritte Umdrehungsachse (29) herum die Drehung des Nadelkäfigs (5) um die erste Umdrehungsachse (6) herum antreiben kann.

7. Anordnung, die dazu bestimmt ist, ein Kaltdehnen einer Bohrung (2) durch ein Werkstück (3) hindurch auszuführen, **dadurch gekennzeichnet, dass** sie umfasst:
- ein Werkzeug zum Kaltdehnen einer Bohrung (2) durch ein Werkstück (3) hindurch nach einem der Ansprüche 1 bis 6 und
- einen zylindrischen Nadelkäfig (5), der eine erste Umdrehungsachse (6) aufweist, um die herum in der Bohrung (2) in Drehung zu gelangen der Nadelkäfig (5) bestimmt ist, wobei der Nadelkäfig (5) Nadeln (7) beinhaltet, die Längsachsen (8) aufweisen, die dazu bestimmt sind, parallel zu der ersten Umdrehungsachse (6) zu sein, wobei die Nadeln (7) dazu ausgestaltet sind, sich radial (9) von der ersten Umdrehungsachse (6) weg zu verlagern, um die Bohrung (2) kaltzuverfestigen, während der Nadelkäfig (5) durch das erste Antriebsmodul (23) drehangetrieben wird.

8. Verfahren zur Verwendung der Anordnung nach Anspruch 7, die dazu bestimmt ist, ein Kaltdehnen (1) einer Bohrung (2) durch ein Werkstück (3) hindurch auszuführen, **dadurch gekennzeichnet, dass** es die folgenden Schritte umfasst:
- einen Schritt (E2) des Platzierens des Nadelkäfigs (5) in der Bohrung (2),
- einen Schritt (E3) des Haltens des Nadelkäfigs (5) in der Bohrung (2),
- einen Schritt (E4) des Drehantreibens des Nadelkäfigs (5) in der Bohrung (2) durch das erste Antriebsmodul (23),
- einen Schritt (E51) des Intranslationversetzens der Stange (11) entlang der zweiten Umdrehungsachse (12), der vom zweiten Antriebsmodul (15) implementiert wird und darin besteht, die Stange (11) entlang der zweiten Umdrehungsachse (12) translatorisch anzutreiben, so dass der Polierer (14) den in der Bohrung (2) zurückgehaltenen Nadelkäfig (5) vollständig durchdringt.

9. Verfahren nach Anspruch 8, **dadurch gekennzeichnet, dass** es ferner umfasst:
- einen Schritt (E1) des Schiebens des Nadelkäfigs (5) auf die Stange (11), wobei der Schritt (E1) des Schiebens dem Schritt (E2) des Platzierens des Nadelkäfigs (5) in der Bohrung (2) vorausgeht.

10. Verfahren nach einem der Ansprüche 8 oder 9, **dadurch gekennzeichnet, dass** es ferner einen Schritt (E52) des Indrehungversetzens der Stange (11) um die zweite Umdrehungsachse (12) herum umfasst, der vom zweiten Antriebsmodul (15) implementiert wird, wobei der Schritt (E52) des Indrehungversetzens und der Schritt (E51) des Intranslationversetzens gleichzeitig stattfinden.

## Claims

1. Cold expansion tool for expanding a bore (2) through a part (3), **characterized in that** it comprises:
- a tool body (4) configured for manipulating the cold expansion tool (1);
- a first drive module (23) configured for driving the rotation of a cylindrical needle cage (5) in the bore (2), the cylindrical needle cage (5) having a first axis of revolution (6) about which the needle cage (5) is intended to start to rotate in the bore (2), the needle cage (5) comprising needles (7) configured to move radially (9) away from the first axis of revolution (6) so as to work-harden the bore (2) as the needle cage (5) is rotationally driven by the first drive module (23);
- a rod (11) having a second axis of revolution (12), the rod (11) being intended to be inserted in the needle cage (5), the rod (11) having a first end (13) equipped with a burnisher (14) intended to move the needles (7) of the needle cage (5) radially as the burnisher (14) passes through the needle cage (5), the rod (11) being configured to enter the tool body (4) translationally along the second axis of revolution (12) parallel to the first axis of revolution (6) so as to cause the burnisher (14) to pass through the needle cage (5);
- a second drive module (15) intended to drive the rod (11) translationally along the second axis of revolution (12) so that the burnisher (14) passes all the way through the needle cage (5) held in the bore (2).

2. Tool according to Claim 1,
**characterized in that** the rod (11) comprises:
- a second end (16) having a screw thread (17) and
- a portion (18) comprising first splines,
**in that** the tool body (4) comprises an opening (19) having a tapped thread, the screw thread (17) of the second end (16) of the rod (11) being configured to engage with the tapped thread of the opening (19) of the tool body (4), and **in that** the second drive module (15) comprises a first gearwheel (20), a second gearwheel (21) and a first motor (22) fixed to the tool body (4), the first motor (22) being configured to generate a first driving torque, the first gearwheel (21) being configured to transmit the first driving torque to the second gearwheel (22), the second gearwheel (21) comprising a hub having second splines, the second splines being configured to engage with the first splines of the portion (18) of rod (11) so as to drive the rotation of the rod (11) about the second axis of revolution (12), the rotation of the rod (11) causing the translational movement of the rod (11) as a result of the engagement of the screw thread (17) of the second end (16) of the rod (11) with the tapped thread of the opening (19) of the tool body (4).

3. Tool according to Claim 1,
**characterized in that** it comprises a third drive module intended to drive the rotation of the rod (11) about the second axis of revolution (12).

4. Tool according to Claim 2,
**characterized in that** the first drive module (23) comprises the second drive module (15), the burnisher (14) being configured to drive the rotation of the needle cage (5) using friction as the burnisher (14) passes through the needle cage (5).

5. Tool according to Claim 3,
**characterized in that** the first drive module (23) comprises the third drive module, the burnisher (14) being configured to drive the rotation of the needle cage (5) using friction as the burnisher (14) passes through the needle cage (5).

6. Tool according to any one of Claims 1 to 3, **characterized in that** the first drive module (23) comprises:
- a cylinder (24) comprising a first connection device (25),
- a third gearwheel (26),
- a fourth gearwheel (27) coaxial with and secured to the cylinder (24), and
- a second motor (28) fixed to the tool body (4) and configured to generate a second driving torque,
the cylinder (24) having a third axis of revolution (29) coincident with the first axis of revolution (6),
the third gearwheel (26) being configured to transmit the second driving torque to the fourth gearwheel (27),
the fourth gearwheel (27) being configured to drive the rotation of the cylinder (24) about the third axis of revolution (29) when the third gearwheel (26) is transmitting the second driving torque to the fourth gearwheel (27),
the first connection device (25) being configured to engage with a second connection device (30) of the needle cage (5) so that rotation of the cylinder (24) about the third axis of revolution (29) can drive the rotation of the needle cage (5) about the first axis of revolution (6) .

7. Assembly intended to perform cold expansion of a bore (2) through a part (3),
**characterized in that** it comprises:
- a cold expansion tool for expanding a bore (2) through a part (3) according to any one of Claims 1 to 6, and
- a cylindrical needle cage (5) having a first axis of revolution (6) about which the needle cage (5) is intended to begin to rotate in the bore (2), the needle cage (5) comprising needles (7) having longitudinal axes (8) which are intended to be parallel to the first axis of revolution (6), the needles (7) being configured to move radially (9) away from the first axis of revolution (6) so as to work-harden the bore (2) while the needle cage (5) is rotationally driven by the first drive module (23) .

8. Method for using the assembly intended to perform cold expansion (1) of a bore (2) through a part (3) according to Claim 7,
**characterized in that** it comprises the following steps:
- a step (E2) of placing the needle cage (5) in the bore (2),
- a step (E3) of holding the needle cage (5) in the bore (2),
- a step (E4) of rotationally driving the needle cage (5) in the bore (2) using the first drive module (23) ,
- a step (E51) of causing the rod (11) to make a translational movement along the second axis of revolution (12), this step being implemented by the second drive module (15), consisting in driving the translational movement of the rod (11) along the second axis of revolution (12) so that the burnisher (14) passes all the way through the needle cage (5) held in the bore (2).

9. Method according to Claim 8,
**characterized in that** it further comprises:
- a step (E1) of sliding the needle cage (5) onto the rod (11), the sliding step (E1) preceding the step (E2) of placing the needle cage (5) in the bore (2) .

10. Method according to either one of Claims 8 and 9, **characterized in that** it further comprises a step (E52) of setting the rod (11) in rotation about the second axis of revolution (12), this step being implemented by the second drive module (15), the step (E52) of starting rotation being concomitant with the step (E51) of starting translation.
